# EUROPEAN PATENT SPECIFICATION

(11) **EP 3 344 937 B1**
(45) Date of publication and mention of the grant of the patent: **25.09.2024**
(21) Application number: 16763931.9
(22) Date of filing: 31.08.2016
(51) Int. Cl.: F26B 3/347, F26B 25/00

(54) **SYSTEM AND METHOD FOR DRYING EXTRUDED HONEYCOMB BODIES**
SYSTEM UND VERFAHREN ZUM TROCKNEN DER EXTRUDIERTEN WABENKÖRPER
SYSTÈME ET MÉTHODE POUR SECHER DES STRUCTURES EN NID D'ABEILLE ETRUDÉES

(30) Priority: 31.08.2015 DE 102015216647
(43) Date of publication of application: 11.07.2018
(73) Proprietor: Johnson Matthey Catalysts (Germany) GmbH, 96257 Redwitz an der Rodach (DE)
(72) Inventor: DOTZEL, Ralf, 96257 Redwitz an der Rodach (DE); FISCHER, Walter, 96257 Redwitz an der Rodach (DE); LEPPELT, Rainer, 96257 Redwitz an der Rodach (DE); MÜNCH, Jörg Werner, 96257 Redwitz an der Rodach (DE); ZAPF, Thomas, 96257 Redwitz an der Rodach (DE); SCHOENE, Thomas, 96257 Redwitz an der Rodach (DE); HIRSCHMANN, Thomas, 96257 Redwitz an der Rodach (DE); PROSCKE, Thomas, 96257 Redwitz an der Rodach (DE)
(74) Representative: Johnson Matthey Plc
(86) International application number: PCT/GB2016/052695
(87) International publication number: WO 2017/037452

(56) References cited:
- DE-B4- 102011 016 066
- US-A1- 2008 136 062
- US-A1- 2008 136 062
- US-A1- 2009 166 355
- US-A1- 2009 166 355
- US-A1- 2010 165 103
- US-A1- 2010 165 103

## Description

US2009/166355 relates generally to microwave applicators and systems for heat processing of dielectric materials.

US2008/136062 relates to the manufacture of ceramic molded bodies that can be used, for example, to filter exhaust gases of internal combustion engines or as a catalyst supporting carrier.

The invention relates to a system for drying extruded honeycomb bodies which has channels that extend in a longitudinal direction and are bounded by first channel walls that extend in a first direction transverse relative to the longitudinal direction and by second channel walls that extend in a second direction which is also transverse to the longitudinal direction. The invention also relates to a method for drying such honeycomb bodies.

Such a system and such a method can be found, for example, in DE 10 2011 016 066 B4. The honeycomb bodies are typically composed of a ceramic mass, and the drying of the honeycomb bodies is a partial step during the manufacture of a ceramic honeycomb body, and for forming a ceramic honeycomb catalyst in particular. The honeycomb bodies are usually manufactured by means of extrusion of a pasty ceramic moist mass. In the case of ceramic honeycomb catalysts, the catalyst is combined with other components in the pasty ceramic moist mass. The honeycomb bodies are subsequently firstly dried before they are subjected to the sintering in a high-temperature treatment.

The honeycomb body usually has channels which extend in the longitudinal direction of the honeycomb body. These channels are bounded here by first and second channel walls which extend in a first and a second direction transverse relative to the longitudinal direction. The channel walls are typically formed here in a lattice-like fashion and are preferably oriented perpendicularly with respect to one another in a plane transverse relative to the longitudinal direction.

The manufactured honeycomb catalysts are used, in particular, for exhaust gas purification, for example for nitrogen oxide reduction as SCR catalysts. Such honeycomb catalysts are, in particular, also used in vehicles or for treating stationary emissions, such as those produced from power plants.

For the sake of cost-effective and efficient manufacture, such honeycomb catalysts are frequently dried in a run-through method after the extrusion process and to be precise, preferably to a predefined residual moisture content before they are subsequently subjected to temperature treatment, specifically a sintering process, in order to form the ceramic solid body. EP 2 227 447 B1 discloses here a freeze-drying method in which the moist honeycomb catalysts are firstly frozen and subsequently irradiated with microwaves. Such a method has proven particularly efficient. The drying period could be shortened here to significantly less than 1 hour. A particular advantage of this method is to be seen in the fact that the drying is carried out by sublimation from a frozen state, i.e. that the water passes directly into the gas phase. Homogeneous drying without heating of the honeycomb body is aimed at here through the microwave irradiation. In contrast, with conventional IR irradiation for assisting the drying a temperature gradient would be produced (hot on the outside and cold on the inside) which is disadvantageous.

The drying process should generally take place in the most uniform and non-stressing fashion possible in order to avoid the generation of fractures.

DE 10 2011 016 066 B4 discloses, for the purpose of providing microwave-assisted drying in a microwave oven, the use of a plurality of microwave radiators which are offset in the longitudinal direction of the microwave oven and which are each arranged rotationally offset with respect to one another, with the result that they irradiate the individual bodies with a directional microwave beam at different angle directions.

Tests have shown that with such a microwave-assisted drying method there is, however, still the risk that, owing to unfavourable microwave irradiation, fractures can arise within the honeycomb body during the drying process, which fractures influence the mechanical stability and, under certain circumstances, make the honeycomb catalyst unusable.

Taking this as a starting point, the invention is based on the object of specifying a system and a method for drying such honeycomb bodies, in particular composed of a ceramic mass, wherein such fractures are as far as possible avoided.

The object is achieved according to the invention by means of a system for extruding and drying an extruded honeycomb body having the features of claim 1 and by means of a method for drying extruded honeycomb bodies having the features of claim 11. Preferred developments are contained in the dependent claims. The advantages of the preferred embodiments which are specified with respect to the system are to be accordingly transferred to the method.

The system and method is for use in manufacturing extruded honeycomb bodies having open ends at both ends of its channels in a so-called flow-through arrangement. These honeycomb bodies can be inert ceramic honeycomb bodies made from materials such as cordierite. Such extruded honeycomb bodies are typically subsequently coated with a catalytic washcoat to form a desired catalytic converter, preferably for an automobile.

The extruded honeycomb bodies made according to the method of the present invention can also be processed subsequently by inserting end plugs into channels at a first end of the honeycomb body in a chequer board pattern and by inserting end plugs into channels at a second end of the honeycomb body also in a chequer board pattern but offset from the channels plugged at the first end, the arrangement being such that that each channel contains only one end plug. The extruded honeycomb bodies including end plugs as just described are known as wall-flow filters.

Most preferably, the system and method is used to make extruded honeycomb bodies that are extruded honeycomb catalysts, i.e. wherein a suitable catalyst is added to a paste that is subsequently extruded so that the paste, when dried and sintered, comprises catalyst that also contributes to the mechanical structure of the honeycomb body. Such catalysts are preferably catalysts for selective catalytic reduction (SCR) of oxides of nitrogen (NOₓ) using nitrogenous reductants, e.g. ammonia and include transition metal-promoted crystalline molecular sieves. Preferred crystalline molecular sieves including aluminosilicate zeolites and preferred transition metal-promoters include copper, iron or both copper and iron. Alternatively, the SCR catalyst can be a vanadium/tungsten/titania catalyst.

The system comprises a microwave oven having a plurality of microwave radiators for irradiating the honeycomb body with a directional microwave beam in a predefined irradiation direction. The system is then designed in such a way that it is ensured that the irradiation direction is oriented at a predefined irradiation angle relative to the two transverse directions in which the channel walls extend. In this regard, the irradiation angle with respect to the two transverse directions is not zero, i.e. it is unequal to zero. As a result of the specific configuration of the system, parallel irradiation with respect to the orientation of the channel walls is therefore reliably avoided.

The inventors have found in tests that the formation of the undesired fractures is promoted if the microwave radiation is oriented parallel to the channel walls. During the drying process, stresses usually arise within the honeycomb body. Given such directional irradiation, inhomogeneous drying clearly occurs, with the result that stresses arise inside the honeycomb body during the drying process, which stresses can no longer be absorbed by the honeycomb body and then give rise to the fractures. The inventors have found that problem is avoided by the specifically claimed, "anti-parallel" irradiation, i.e. an irradiation angle with respect to the two transverse directions is not zero. By means of the specific orientation, the stresses which occur are better absorbed by the honeycomb body, with the result that the generation of fractures is avoided or at least reduced. Furthermore, the specific anti-parallel irradiation also prevents undesired focusing effects of the microwave radiation inside the honeycomb body, which also at least inhibits the production of fractures.

The system comprises not only the microwave oven but also an extruder for producing the honeycomb bodies by means of extrusion.

The extrusion head has a pattern which is complementary to the honeycomb structure of the honeycomb body, that is to say has first and second extrusion slits which usually intersect one another and which define the first and second channel walls of the honeycomb body.

Preferably, these extrusion slits are already oriented in the desired transverse directions with respect to the irradiation direction.

According to the invention, the system for ensuring the desired irradiation angle has a control unit, which can be pre-programmed to sense the orientation of the first and/or second channel walls during operation. For this purpose, preferably a, for example, optical measurement system is used which checks the correct orientation of the first and second channel walls of the honeycomb bodies before the entry into the microwave oven, i.e. while in transit from the extruder to the microwave oven or else when the honeycomb body is inside the microwave oven.

The control unit of the system comprises an orientation unit which is designed to re-orient the body and/or also one or more microwave radiator which is moved under control of the control unit into a desired orientation. That is to say, if an unsatisfactory orientation of the honeycomb body is sensed, the orientation unit provides the possibility of correspondingly rotating the body or else one or more microwave radiator, if necessary. However, the honeycomb body is preferably rotated.

The irradiation angle is selected in such a way that it is oriented in the range from 30° to 60° with respect to the first or else the second transverse direction. An irradiation angle of 45° is most preferred.

Since the channel walls are usually oriented at an angle of 90° with respect to one another in lattice-like fashion, a 45° irradiation ensures that the irradiation angle with respect to the two channel walls is identical. In tests, the inventors found that the best results with respect to the avoidance of fractures have been obtained with a 45° orientation.

The system comprises an arrangement of a plurality of microwave radiators in order to promote an efficient drying method. In this context, the irradiation direction of each microwave radiator is oriented at an irradiation angle which is not zero, i.e. each irradiation angle is unequal to zero, with respect to the transverse directions. Therefore, when there is a plurality of microwave radiators it is ensured that parallel irradiation is avoided. Preferably, all the microwave radiators which are used are oriented in such a way that parallel irradiation is avoided. All the microwave radiators preferably have the same irradiation angle with respect to one of the transverse directions.

Furthermore, a plurality of microwave radiators is preferably arranged within a common transverse plane which is transverse relative to the longitudinal direction (L). The microwave radiators are arranged offset here around the circumference of the microwave oven. This permits efficient and uniform drying.

In this context, preferably four microwave radiators are expediently arranged within the transverse plane, wherein the individual microwave radiators are offset, preferably by 90° with respect to one another. This measure ensures, preferably, an irradiation angle of 45° at each microwave radiator.

Alternatively, but preferably additionally to the arrangement of the plurality of microwave radiators within one transverse plane, a plurality of microwave radiators are additionally also arranged offset with respect to one another in the longitudinal direction. The individual microwave radiators which are offset with respect to one another in the longitudinal direction are preferably aligned with one another, that is to say they are not oriented rotationally offset with respect to one another. Therefore, each successive microwave radiator in the longitudinal direction is arranged at the same rotational position as the preceding microwave radiator. Given the arrangement of a plurality of microwave radiators within one transverse plane, this applies to every microwave radiator within the respective transverse plane. Given the use of four microwave radiators per transverse plane, the microwave radiators are therefore arranged, for example, at the positions 12 o'clock, 3 o'clock, 6 o'clock and 9 o'clock in the individual transverse planes.

In order to obtain as efficient a drying process as possible, the method according to the invention can provide continuous drying of a plurality of honeycomb bodies in a run-through method. Correspondingly, the system is embodied in a suitable way and the feed unit serves for, preferably, continuous transfer of the honeycomb bodies in a feeding direction. The feeding direction corresponds here, preferably, to the longitudinal direction of the channels of the honeycomb body. The microwave radiators are arranged laterally and irradiate, preferably, transversely with respect to the longitudinal direction that is to say at an angle of 90° with respect to the longitudinal direction.

Furthermore, the system is embodied in such a way that during operation in the microwave oven an underpressure is set which is less than 20 mbar and, preferably, less than 6 mbar or less than 4 mbar. Correspondingly, a vacuum pump with a suitable pumping power, preferably in combination with a condenser/resublimator, is provided.

The drying method is a freeze-drying method in which therefore the individual honeycomb bodies are frozen before the microwave drying. For this purpose, cooling regions are formed before the actual microwave oven in the feeding direction of the honeycomb bodies, for example by placing cooling coils around a housing which forms an input region of the microwave oven. The honeycomb bodies are usually cooled to a sufficiently low temperature of below freezing.

In addition or preferably alternatively, to a cooling system, the honeycomb bodies are frozen by setting a suitable underpressure of several mbar, for example less than 6 mbar. By lowering the pressure, it is possible to obtain temperatures of below freezing. Preferably with such a concept a changing pressure inside the microwave oven would bring about a variation in the temperature; wherein an increasing pressure would bring about a rise in temperature.

In order to achieve the desired effect of freeze drying, it is preferably ensured that sufficiently low temperatures are ensured during the entire drying process in order to avoid the honeycomb bodies "thawing out". At the same time this ensures that the desired sublimation for drying the honeycomb bodies also takes place reliably without liquid water being present. This would in fact bring about increased formation of fractures.

In one preferred arrangement, there is therefore also provision that the microwave power which is irradiated via the various microwave radiators is adjusted as a function of the internal pressure prevailing in the microwave oven. This arrangement is based on the concept that a high radiation power causes a high mass flow of a water-containing gas to be released, which mass flow is "sucked out" via the vacuum pump. A high mass flow can, however, bring about an increase in the flow resistance and therefore an increase in pressure inside the restricted channels of the honeycomb body through which the mass flow must exit. Under certain circumstances, this brings about an undesired increase in temperature inside the honeycomb body. In order to avoid this, the radiation power is therefore correspondingly regulated in order to reliably avoid such an undesired rise in pressure above a predefined limiting value. If such an undesired rise occurs or the limiting value is approached, the radiation power is, therefore reduced, for example, in order to reduce the mass flow and avoid a further increase in pressure

In order to achieve efficient discharging of the mass flow with the water components which is released, a sufficient distance between two successive honeycomb catalysts inside the microwave oven is furthermore preferred. The inventors discovered through tests that a distance between two successive honeycomb bodies of greater than 2.5 cm, preferably greater than 3 cm, preferably reliably prevents an undesired rise in pressure between the honeycomb bodies. The distance between two successive honeycomb bodies is therefore preferably set to a range between 3 and 6 cm, for example.

Furthermore, in order to obtain targeted, uniform microwave irradiation each microwave radiator can be assigned a separate unit for generating the microwaves. There is therefore no beam splitting by beam splitters. Such beam splitters have also proven to be critical with respect to the production of fractures during operation, since they frequently bring about inhomogeneous irradiation of the microwaves. When a plurality of microwave radiators are arranged within one transverse plane, the same microwave power is preferably irradiated via each of the microwave radiators.

An exemplary embodiment of the invention will now be explained in more detail below with reference to the accompanying drawings, in which:
- FIG 1: shows a schematic longitudinal sectional illustration of a system for drying honeycomb bodies, and
- FIG 2: shows a cross-sectional illustration through the microwave oven along the sectional line II, II in Figure 1.

In the figures, identically acting parts are provided with the same reference symbols.

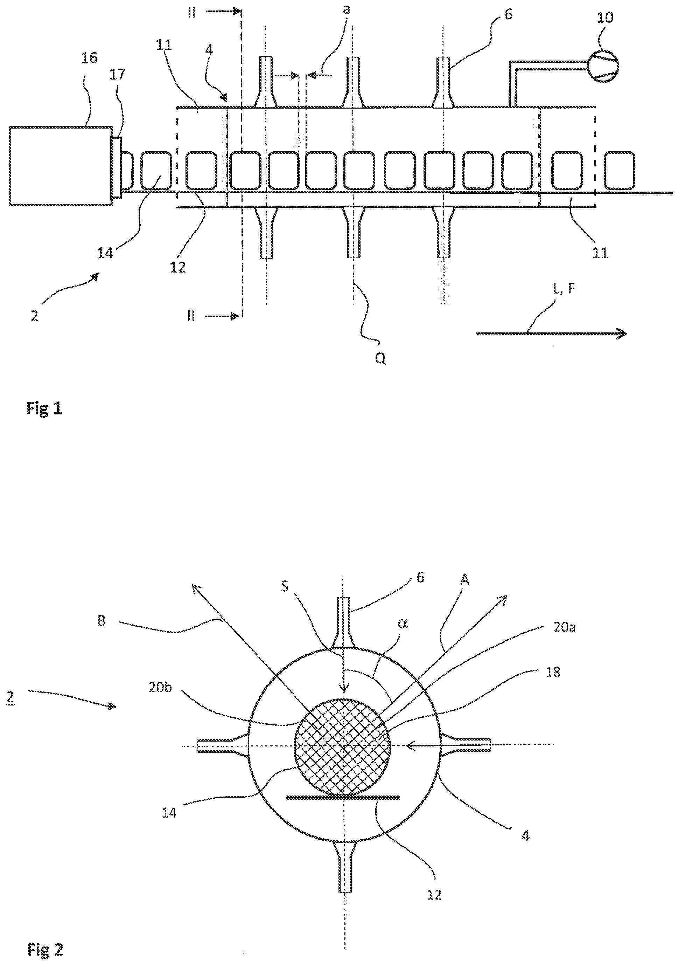

The system 2 which is illustrated in Figure 1 comprises a microwave oven 4 which extends in a longitudinal direction L and is embodied overall in the manner of an elongated duct. The duct preferably has a circular-round cross section. Alternatively, the cross section of the microwave oven duct is often in the form of a polygon, for example rectangular and, preferably, square. The microwave oven 4 has a plurality of microwave radiators 6. In the exemplary embodiment, the latter are arranged offset with respect to one another in the longitudinal direction L. In addition, a plurality of microwave radiators 6 are each arranged within a transverse plane Q.

As is apparent, in particular, from Figure 2, in total four microwave radiators 6 are arranged distributed around the circumference of the microwave oven 4 here, which microwave radiators 6 are each arranged offset with respect to one another by, in particular, 90°.

The microwave radiators 6 are firstly simple microwave waveguides which open into an antenna which is preferably embodied as what is referred to as a horn radiator, as is indicated in Fig. 1. The antennas (horn radiators) are arranged radially on the microwave oven 4 and open into the interior of the microwave oven duct. In order to generate the microwaves, a separate microwave-generating unit is preferably provided for each individual microwave radiator 6 in a way which is not illustrated in more detail here. Said microwave-generating unit therefore outputs the generated microwave radiation into the guide channel of the respective microwave radiator 6.

In order to set a desired underpressure inside the microwave oven 4, a vacuum system 8 with a vacuum pump 10 is also arranged, said vacuum system 8 setting the internal pressure inside the microwave oven 4 during operation preferably to a value and typically in the range from less than approximately 6 mbar and also holding it there. In addition to the vacuum pump, the condenser/resublimator (not illustrated in more detail here) is arranged for the water which is released during the drying process. On the input or output side of a drying zone of the microwave oven 4, inside which zone the individual microwave radiators 6 are arranged, locks 11 are formed via which the honeycomb bodies 14 are fed into or out of the underpressure region of the microwave oven. Furthermore, in one preferred embodiment a transition zone is formed between the locks 11 and the respectively closest microwave radiator 6, said transition zone having, in the longitudinal direction L, a length of several 10 cm, in particular in the range from at least 30 to 50 cm up to preferably at maximum approximately 1 metre. As a result, (plasma) discharges are reliably avoided.

The drying zone with the microwave radiators 6 and the two transition zones preferably form a one-storied, preferably tubular, component which is securely adjoined by further components of the system 2, in particular the locks 11, for example via a flange connection.

Furthermore, inside the microwave oven 4 a feed unit 12 is arranged, on which feed unit 12 a plurality of honeycomb bodies 14 are arranged during operation. The feed unit 12 feeds the individual honeycomb bodies 14 continuously through the microwave oven 4 in the longitudinal direction L in a run-through method. The feed unit 12 therefore feeds the honeycomb bodies 14 in a feed direction F which corresponds to the longitudinal direction L of the microwave oven. The honeycomb bodies 14 have here a distance a in the range of several cm, in particular of more than 3 cm, and preferably in the range from 3 to 6 cm.

The system 2 also has an extruder 16 comprising an extrusion head 17 on a side oriented to the microwave oven 4. The honeycomb catalysts 14 are generated from a ceramic, pasty mass by means of a shaping process using the extruder 16. Subsequent to the extruder 16, a cutting device is formed (in a way not illustrated here), by means of which the extruded length of material which exits the extrusion head 17 is repeatedly cut, with the result that individual honeycomb bodies 14 are formed.

The honeycomb bodies 14 have here, for example, a diameter of approximately 5 to 14 inches (12.7 to 35.6 cm) and a length of 5 to 10 inches (12.7 to 25.4 cm).

The honeycomb bodies 14 are preferably frozen exclusively by means of a suitable reduction in pressure, without an additional cooling device being arranged. The honeycomb bodies 14 are therefore frozen by the low pressure, with the result that the water which is contained in the honeycomb bodies 14 is enclosed in the form of ice.

It is particularly significant that the entire system 2 is conceived in such a way that the individual honeycomb bodies 14 run through the microwave oven 4 with a defined orientation with respect to the individual microwave radiator 6.

According to the invention, devices for controlling the desired orientation are integrated, for example a measuring device for checking the desired orientation and/or an orientation unit for bringing about the desired orientation.

The honeycomb bodies 14 are extruded honeycomb bodies which frequently have a circular cross-sectional shape, that is to say are preferably embodied overall in the form of cylinders. They extend here in the longitudinal direction L and have a plurality of individual channels 18, such as is apparent, in particular, from Figure 2. These individual channels 18 pass through the honeycomb body 14, preferably completely in the longitudinal direction L and therefore enter and respectively exit at the end sides at inlet and outlet openings. The individual channels 18 are each respectively bounded by first channel walls 20a and second channel walls 20b. The first channel walls 20a extend in a first transverse direction A, and the second channel walls 20b extend in a second transverse direction B. The channel walls 20a, 20b are, in particular, embodied in the manner of a lattice and are perpendicular to one another. Correspondingly, the two transverse directions A, B are also oriented perpendicularly with respect to one another.

A directional microwave beam is irradiated into the microwave oven 4 during operation in each case in an irradiation direction S by means of the individual microwave radiators 6. Said irradiation direction S is oriented here at an irradiation angle α with respect to the two transverse directions A, B. In the exemplary embodiment, the irradiation angle α is in each case 45° with respect to the two transverse directions A, B.

The operation of the system 2 is subject to open-loop and, preferably, also closed-loop control by a control device (not illustrated in more detail here). In order to achieve continuous and efficient operation, the individual honeycomb bodies 14 are guided at a predefined speed in the longitudinal direction L through the microwave oven 4. Sensors, preferably a weight sensor, moisture sensors etc., by means of which, for example, at least indirectly a moisture content of the honeycomb bodies 14 before the entry into the microwave oven 6 is sensed, are preferably arranged inside the system 2. For example the irradiated microwave power is then suitably controlled as a function of the degree of moisture.

Generally, the irradiated radiation power is suitably adjusted using a control unit, with the result that homogeneous drying which is as uniform as possible to a defined residual moisture content takes place. The adjustment takes place here, in particular, as a function of the internal pressure within the microwave oven 6. The control variable is a desired maximum internal pressure. This ensures that an excessively high sublimation rate does not result in an excessively high mass flow which would bring about an undesired increase in pressure and therefore an undesired rise in temperature, with the risk of (even partial) thawing out.

The irradiated radiation power per transverse plane Q is here, for example, in the range of several kilowatts. Here, the irradiated radiation power in the front transverse planes Q is usually greater than in the rear transverse planes Q, where pre-drying has already taken place. The irradiation powers of, in particular, the first transverse plane Q are also set, and are regulated, for example, as a function of the properties of the honeycomb body 14 at the entry to the microwave oven 4, in particular as a function of its weight.

The system described here with the defined orientation of the honeycomb bodies 14 with respect to the radiation direction S permits a particularly suitable, prompt drying method in which the risk of the formation of fractures is low. A further significant aspect is the adjustment of the radiation power with the result that a rise in pressure above a predefined maximum value is avoided.

### List of reference symbols

- 2: System
- 4: Microwave oven
- 6: Microwave radiator
- 8: Vacuum system
- 10: Vacuum pump
- 11: Lock
- 12: Feed unit
- 14: Honeycomb body
- 16: Extruder
- 17: Extrusion head
- 18: Channels
- 20a: First channel wall
- 20b: Second channel wall
- L: Longitudinal direction
- F: Feed direction
- a: Distance
- Q: Transverse plane
- A: First transverse direction
- B: Second transverse direction
- S: Irradiation direction
- α: Irradiation angle

## Claims

1. A system (2) for extruding and freeze-drying an extruded honeycomb body (14) which has channels (18) that extend in a longitudinal direction (L) and which channels (18) are each bounded by first channel walls (20a) that extend in a first direction (A) which is transverse relative to the longitudinal direction (L), and by second channel walls (20b) that extend in a second direction (B) which is also transverse relative to the longitudinal direction (L), which system comprising:
(i) an extruder (16) having an extrusion head (17) for producing the honeycomb body (14) by extrusion;
(ii) a microwave oven (4) comprising an arrangement of a plurality of microwave radiators (6), each microwave radiator being for irradiating the honeycomb body with a directional microwave beam in an irradiation direction (S); and
(iii) a feed unit (12) adjoining the extruder (16) for transferring the honeycomb body from the extruder (16) into the microwave oven (4),
wherein the system comprises a vacuum pump and wherein during operation the internal pressure in the microwave oven (4) is set to less than 20 mbar; and the system comprises cooling regions for freezing the honeycomb bodies before the microwave oven (4),
and wherein the system (2) is designed to sense the orientation of the first and/or second channel walls (20a, 20b) of the honeycomb body produced by the extruder and to move the honeycomb body and/or a microwave radiator (6) into a set point orientation such that the irradiation direction (S) of each microwave radiator (6) is oriented at a predefined irradiation angle (a) which is not zero relative to each of the two transverse directions (A, B) of the first and second channel walls (20a, 20b), wherein the predefined irradiation angle is in the range from 30° to 60° with respect to the first or the second transverse direction (A, B) of the first and second channel walls (20a, 20b).

2. A system (2) according to claim 1, wherein the predefined irradiation angle (a) is 45° with respect to the first or the second transverse direction (A, B) of the first and second channel walls (20a, 20b).

3. A system (2) according to claim 1 or 2,wherein a plurality of microwave radiators (6) are arranged within a plane (Q) which is transverse relative to the longitudinal direction (L).

4. A system (2) according to claim 1, 2 or 3,wherein the microwave oven comprises an arrangement of four microwave radiators (6) which are each offset by 90° with respect to one another.

5. A system (2) according to claim 3 or 4, wherein a plurality of transverse planes (Q) which are offset with respect to one another in the longitudinal direction (L) are each provided with a plurality of microwave radiators (6), in particular four, which are offset by 90° with respect to one another.

6. A system (2) according to any of claims 1 to 4, wherein the individual microwave radiators (6) of the various transverse planes (A, B) of the first and second channel walls (20a, 20b) are aligned with one another in the longitudinal direction (L).

7. A system (2) according to any preceding claim which is designed to continuously dry a plurality of honeycomb bodies in a run-through process, and the feed unit (12) is designed to transfer the bodies in a feeding direction (F) which is parallel to the longitudinal direction (L).

8. A system (2) according to any preceding claim, wherein during operation the internal pressure in the microwave oven (4) is set to less than 6 mbar.

9. A system (2) according to any preceding claim designed in such a way that during operation the irradiated microwave power is adjusted as a function of the pressure prevailing in the microwave oven (4).

10. A system (2) according to any preceding claim, wherein each microwave radiator (6) has its own unit for generating the microwaves.

11. A method of freeze-drying extruded honeycomb bodies (14) which have channels (18) that extend in a longitudinal direction (L) and which channels (18) are each bounded by first channel walls (20a) that extend in a first direction (A) which is transverse relative to the longitudinal direction (L), and by second channel walls (20b) that extend in a second direction (B) which is also transverse relative to the longitudinal direction (L), which method uses the system as claimed in any of claims 1 to 10 and comprises the steps of irradiating the extruded honeycomb bodies (14) in a microwave oven (4) with microwave radiation from a plurality of microwave radiators (6), each microwave radiator being for irradiating the extruded honeycomb body with a directional microwave beam in an irradiation direction (S),and ensuring that the irradiation direction (S) of each microwave radiator is oriented at a predefined irradiation angle (a) relative to the two transverse directions (A, B) of the first and second channel walls (20a, 20b) which is not zero,
wherein the predefined irradiation angle is in the range from 30° to 60° with respect to the first or the second transverse direction (A, B) of the first and second channel walls (20a, 20b),
wherein the drying is performed with an internal pressure in the microwave oven (4) set to less than 20mbar, and
wherein the honeycomb bodies are frozen before the microwave drying.

12. A method according to claim 11, wherein the extruded honeycomb bodies (14) are extruded by means of an extruder (16), and the step of ensuring that the irradiation direction (S) of each microwave radiator is oriented at a predefined irradiation angle (a) relative to the two transverse directions (A, B) of the first and second channel walls (20a, 20b) which is not zero is provided by the step of placing the extruded honeycomb body on a feed unit (12) in such an orientation that the condition of the predefined irradiation angle (a) relative to the two transverse directions (A, B) of the first and second channel walls (20a, 20b) of the honeycomb body when it is transferred into the microwave over (4) is met.

13. A method according to claim 11 or 12,wherein the honeycomb bodies (14) are at a distance of greater than 3 cm and less than 6 cm from one another in the longitudinal direction (L) inside the microwave oven (4).

## Patentansprüche

1. System (2) zum Extrudieren und Gefriertrocknen eines extrudierten Wabenkörpers (14), der Kanäle (18) aufweist, die sich in einer Längsrichtung (L) erstrecken, und wobei die Kanäle (18) jeweils durch erste Kanalwände (20a), die sich in einer ersten Richtung (A) erstrecken, die quer relativ zu der Längsrichtung (L) ist, und durch zweite Kanalwände (20b) begrenzt sind, die sich in einer zweiten Richtung (B) erstrecken, die ebenfalls quer relativ zu der Längsrichtung (L) ist, das System umfassend:
(i) einen Extruder (16), der einen Extrusionskopf (17) zum Herstellen des Wabenkörpers (14) durch Extrusion aufweist;
(ii) einen Mikrowellenofen (4), umfassend eine Anordnung aus einer Vielzahl von Mikrowellenstrahlern (6), wobei jeder Mikrowellenstrahler zum Bestrahlen des Wabenkörpers mit einem gerichteten Mikrowellenstrahl in einer Bestrahlungsrichtung (S) dient; und
(iii) eine Zuführeinheit (12), die an den Extruder (16) angrenzt, zum Überführen des Wabenkörpers von dem Extruder (16) in den Mikrowellenofen (4),
wobei das System eine Vakuumpumpe umfasst und wobei während eines Betriebs der Innendruck in dem Mikrowellenofen (4) auf weniger als 20 mbar eingestellt ist; und das System Kühlbereiche zum Einfrieren der Wabenkörper vor dem Mikrowellenofen (4) umfasst, und wobei das System (2) gestaltet ist, um die Orientierung der ersten und/oder der zweiten Kanalwände (20a, 20b) des Wabenkörpers zu erfassen, der durch den Extruder hergestellt wird, und um den Wabenkörper und/oder einen Mikrowellenstrahler (6) in eine Sollwertorientierung derart zu bewegen, dass die Bestrahlungsrichtung (S) jedes Mikrowellenstrahlers (6) in einem vordefinierten Bestrahlungswinkel (a), der nicht null ist, relativ zu jeder der zwei Querrichtungen (A, B) der ersten und der zweiten Kanalwände (20a, 20b) orientiert ist, wobei der vordefinierte Bestrahlungswinkel im Bereich von 30° bis 60° in Bezug auf die erste oder die zweite Querrichtung (A, B) der ersten und der zweiten Kanalwände (20a, 20b) liegt.

2. System (2) nach Anspruch 1, wobei der vordefinierte Bestrahlungswinkel (a) 45° in Bezug auf die erste oder die zweite Querrichtung (A, B) der ersten und der zweiten Kanalwände (20a, 20b) beträgt.

3. System (2) nach Anspruch 1 oder 2, wobei eine Vielzahl von Mikrowellenstrahler (6) innerhalb einer Ebene (Q) angeordnet sind, die quer relativ zu der Längsrichtung (L) verläuft.

4. System (2) nach Anspruch 1, 2 oder 3, wobei der Mikrowellenofen eine Anordnung von vier Mikrowellenstrahlern (6) umfasst, die jeweils um 90° in Bezug aufeinander versetzt sind.

5. System (2) nach Anspruch 3 oder 4, wobei eine Vielzahl von Querebenen (Q), die in der Längsrichtung (L) in Bezug aufeinander versetzt sind, jeweils mit einer Vielzahl von Mikrowellenstrahlern (6) versehen sind, insbesondere vier, die um 90° in Bezug aufeinander versetzt sind.

6. System (2) nach einem der Ansprüche 1 bis 4, wobei die einzelnen Mikrowellenstrahler (6) der verschiedenen Querebenen (A, B) der ersten und der zweiten Kanalwände (20a, 20b) in der Längsrichtung (L) zueinander ausgerichtet sind.

7. System (2) nach einem der vorstehenden Ansprüche, das gestaltet ist, um eine Vielzahl von Wabenkörpern in einem Durchlaufvorgang kontinuierlich zu trocknen, und wobei die Zuführeinheit (12) gestaltet ist, um die Körper in eine Zuführrichtung (F) zu überführen, die parallel zu der Längsrichtung (L) verläuft.

8. System (2) nach einem der vorstehenden Ansprüche, wobei während des Betriebs der Innendruck in dem Mikrowellenofen (4) auf weniger als 6 mbar eingestellt ist.

9. System (2) nach einem der vorstehenden Ansprüche, das derart ausgebildet ist, dass während des Betriebs die Bestrahlungsmikrowellenleistung in Abhängigkeit von dem Druck eingestellt wird, der in dem Mikrowellenofen (4) herrscht.

10. System (2) nach einem der vorstehenden Ansprüche, wobei jeder Mikrowellenstrahler (6) seine eigene Einheit zum Erzeugen der Mikrowellen aufweist.

11. Verfahren zum Gefriertrocknen von extrudierten Wabenkörpern (14), die Kanäle (18) aufweisen, die sich in einer Längsrichtung (L) erstrecken, und wobei die Kanäle (18) jeweils durch erste Kanalwände (20a), die sich in einer ersten Richtung (A) erstrecken, die quer relativ zu der Längsrichtung (L) ist, und durch zweite Kanalwände (20b) begrenzt sind, die sich in einer zweiten Richtung (B) erstrecken, die ebenfalls quer relativ zu der Längsrichtung (L) ist, wobei das Verfahren das System nach einem der Ansprüche 1 bis 10 verwendet und die Schritte des Bestrahlens der extrudierten Wabenkörper (14) in einem Mikrowellenofen (4) mit Mikrowellenstrahlung von einer Vielzahl von Mikrowellenstrahlern (6) umfasst, wobei jeder Mikrowellenstrahler zum Bestrahlen des extrudierten Wabenkörpers mit einem gerichteten Mikrowellenstrahl in einer Bestrahlungsrichtung (S) dient, und wobei sichergestellt wird, dass die Bestrahlungsrichtung (S) jedes Mikrowellenstrahlers in einem vordefinierten Bestrahlungswinkel (a) relativ zu den zwei Querrichtungen (A, B) der ersten und zweiten Kanalwände (20a, 20b) orientiert ist, der nicht null ist,
wobei der vordefinierte Bestrahlungswinkel im Bereich von 30° bis 60° in Bezug auf die erste oder die zweite Querrichtung (A, B) der ersten und der zweiten Kanalwände (20a, 20b) liegt,
wobei das Trocknen bei einem Innendruck in dem Mikrowellenofen (4) durchgeführt wird, der auf weniger als 20 mbar eingestellt ist, und wobei die Wabenkörper vor der Mikrowellentrocknung gefroren werden.

12. Verfahren nach Anspruch 11, wobei die extrudierten Wabenkörper (14) mittels eines Extruders (16) extrudiert werden, und der Schritt des Sicherstellens, dass die Bestrahlungsrichtung (S) jedes Mikrowellenstrahlers in einem vordefinierten Bestrahlungswinkel (a) relativ zu den zwei Querrichtungen (A, B) der ersten und der zweiten Kanalwände (20a, 20b) orientiert ist, der nicht null ist, durch den Schritt eines Platzierens des extrudierten Wabenkörpers auf einer Zuführeinheit (12) in einer derartigen Ausrichtung bereitgestellt wird, dass die Bedingung des vordefinierten Bestrahlungswinkels (a) relativ zu den zwei Querrichtungen (A, B) der ersten und der zweiten Kanalwände (20a, 20b) des Wabenkörpers erfüllt ist, wenn dieser in den Mikrowellenofen (4) überführt wird.

13. Verfahren nach Anspruch 11 oder 12, wobei die Wabenkörper (14) in einem Abstand von mehr als 3 cm und weniger als 6 cm voneinander in der Längsrichtung (L) im Inneren des Mikrowellenofens (4) sind.

## Revendications

1. Système (2) d'extrusion et de lyophilisation d'un corps (14) en nid d'abeilles extrudé qui possède des canaux (18) qui s'étendent dans une direction longitudinale (L), lesquels canaux (18) étant chacun délimités par de premières parois de canal (20a) qui s'étendent dans une première direction (A) qui est transversale par rapport à la direction longitudinale (L), et par de secondes parois de canal (20b) qui s'étendent dans une seconde direction (B) qui est également transversale par rapport à la direction longitudinale (L), lequel système comprenant :
(i) une extrudeuse (16) dotée d'une tête d'extrusion (17) pour produire le corps (14) en nid d'abeilles par extrusion ;
(ii) un four à micro-ondes (4) comprenant un agencement d'une pluralité d'émetteurs de micro-ondes (6), chaque émetteur de micro-ondes étant destiné à irradier le corps en nid d'abeilles avec un faisceau de micro-ondes directionnel dans une direction d'irradiation (S) ; et
(iii) une unité d'alimentation (12) adjacente à l'extrudeuse (16) pour transférer le corps en nid d'abeilles de l'extrudeuse (16) dans le four à micro-ondes (4),
dans lequel le système comprend une pompe à vide et dans lequel, pendant le fonctionnement, la pression interne dans le four à micro-ondes (4) est réglée à moins de 20 mbar ; et le système comprend des zones de refroidissement pour congeler les corps en nid d'abeilles avant le four à micro-ondes (4), et dans lequel le système (2) est conçu pour détecter l'orientation des premières et/ou secondes parois de canal (20a, 20b) du corps en nid d'abeilles produit par l'extrudeuse et pour déplacer le corps en nid d'abeilles et/ou un émetteur de micro-ondes (6) dans une orientation de consigne de telle sorte que la direction d'irradiation (S) de chaque émetteur de micro-ondes (6) est orientée à un angle d'irradiation prédéfini (a) qui n'est pas nul par rapport à chacune des deux directions transversales (A, B) des premières et secondes parois de canal (20a, 20b), l'angle d'irradiation prédéfini se situant dans la plage allant de 30° à 60° par rapport à la première ou à la seconde direction transversale (A, B) des premières et secondes parois de canal (20a, 20b).

2. Système (2) selon la revendication 1, dans lequel l'angle d'irradiation prédéfini (a) est de 45° par rapport à la première ou à la seconde direction transversale (A, B) des premières et secondes parois de canal (20a, 20b).

3. Système (2) selon la revendication 1 ou 2, dans lequel une pluralité d'émetteurs de micro-ondes (6) sont agencés dans un plan (Q) transversal par rapport à la direction longitudinale (L).

4. Système (2) selon la revendication 1, 2 ou 3, dans lequel le four à micro-ondes comprend un agencement de quatre émetteurs de micro-ondes (6) qui sont chacun décalés de 90° les uns par rapport aux autres.

5. Système (2) selon la revendication 3 ou 4, dans lequel une pluralité de plans (Q) transversaux décalés les uns par rapport aux autres dans la direction longitudinale (L) sont chacun pourvus d'une pluralité d'émetteurs de micro-ondes (6), en particulier quatre, décalés de 90° les uns par rapport aux autres.

6. Système (2) selon l'une quelconque des revendications 1 à 4, dans lequel les émetteurs de micro-ondes (6) individuels des divers plans transversaux (A, B) des premières et secondes parois de canal (20a, 20b) sont alignés les uns par rapport aux autres dans la direction longitudinale (L).

7. Système (2) selon l'une quelconque revendication précédente, conçu pour sécher en continu une pluralité de corps en nid d'abeilles dans un processus continu, et l'unité d'alimentation (12) est conçue pour transférer les corps dans une direction d'alimentation (F) qui est parallèle à la direction longitudinale (L).

8. Système (2) selon l'une quelconque revendication précédente, dans lequel, pendant le fonctionnement, la pression interne du four à micro-ondes (4) est réglée à moins de 6 mbar.

9. Système (2) selon l'une quelconque revendication précédente, conçu de manière à ce que, pendant le fonctionnement, la puissance des micro-ondes irradiées est réglée en fonction de la pression régnant dans le four à micro-ondes (4).

10. Système (2) selon l'une quelconque revendication précédente, dans lequel chaque émetteur de micro-ondes (6) possède sa propre unité de génération de micro-ondes.

11. Procédé de lyophilisation de corps (14) en nid d'abeilles extrudés qui possèdent des canaux (18) s'étendant dans une direction longitudinale (L), lesquels canaux (18) étant chacun délimités par de premières parois de canal (20a) qui s'étendent dans une première direction (A) qui est transversale par rapport à la direction longitudinale (L), et par de secondes parois de canal (20b) qui s'étendent dans une seconde direction (B) qui est également transversale par rapport à la direction longitudinale (L), lequel procédé utilise le système selon l'une quelconque des revendications 1 à 10 et comprend les étapes consistant à irradier les corps (14) en nid d'abeilles extrudés dans un four à micro-ondes (4) avec un rayonnement de micro-ondes provenant d'une pluralité d'émetteurs de micro-ondes (6), chaque émetteur de micro-ondes étant destiné à irradier le corps en nid d'abeilles extrudé avec un faisceau de micro-ondes directionnel dans une direction d'irradiation (S), et à veiller à ce que la direction d'irradiation (S) de chaque émetteur de micro-ondes est orientée à un angle d'irradiation prédéfini (a) par rapport aux deux directions transversales (A, B) des premières et secondes parois de canal (20a, 20b) qui n'est pas nul,
dans lequel l'angle d'irradiation prédéfini se situe dans la plage allant de 30° à 60° par rapport à la première ou à la seconde direction transversale (A, B) des premières et secondes parois de canal (20a, 20b),
dans lequel le séchage est effectué avec une pression interne dans le four à micro-ondes (4) réglée à moins de 20 mbar, et dans lequel les corps en nid d'abeilles sont congelés avant le séchage par micro-ondes.

12. Procédé selon la revendication 11, dans lequel les corps (14) en nid d'abeilles extrudés sont extrudés au moyen d'une extrudeuse (16), et l'étape consistant à veiller à ce que la direction d'irradiation (S) de chaque émetteur de micro-ondes est orientée selon un angle d'irradiation prédéfini (a) par rapport aux deux directions transversales (A, B) des premières et secondes parois de canal (20a, 20b) qui n'est pas nul est assurée par l'étape consistant à placer le corps en nid d'abeilles extrudé sur une unité d'alimentation (12) dans une orientation telle que la condition de l'angle d'irradiation prédéfini (a) par rapport aux deux directions transversales (A, B) des premières et secondes parois de canal (20a, 20b) du corps en nid d'abeilles lorsqu'il est transféré dans le four à micro-ondes (4) est remplie.

13. Procédé selon la revendication 11 ou 12, dans lequel les corps (14) en nid d'abeilles sont à une distance supérieure à 3 cm et inférieure à 6 cm les uns des autres dans la direction longitudinale (L) à l'intérieur du four à micro-ondes (4).
